# EUROPEAN PATENT SPECIFICATION

(11) **EP 4 577 057 B1**
(45) Date of publication and mention of the grant of the patent: **18.02.2026**
(21) Application number: 23761088.6
(22) Date of filing: 18.08.2023
(51) Int. Cl.: A23L 2/60, A23L 27/30, A23L 27/00

(54) **COMPOSITIONS COMPRISING AROMADENDRIN 3-ACETATE**
ZUSAMMENSETZUNGEN MIT AROMADENDRIN-3-ACETAT
COMPOSITIONS COMPRENANT DE L'AROMADENDRINE 3-ACÉTATE

(30) Priority: 23.08.2022 US 202263373237 P
(43) Date of publication of application: 02.07.2025
(73) Proprietor: Givaudan SA, 1214 Vernier (CH)
(72) Inventor: SHOU, Qingyao, Cincinnati, Ohio 45216 (US); ONUMA, Yosuke, Cincinnati, Ohio 45216 (US); SHI, Feng, Cincinnati, Ohio 45216 (US)
(74) Representative: Global Patents
(86) International application number: PCT/EP2023/072783
(87) International publication number: WO 2024/041991

(56) References cited:
- WO-A1-2021/043842
- WO-A1-2021/119035

## Description

### TECHNICAL FIELD

The present disclosure relates to compositions and methods, which use aromadendrin 3-acetate in combination with sweetness modifiers and/or taste modifiers, in flavor compositions and consumables, to improve the taste quality and/or the mouthfeel of sweet-tasting substances.

### BACKGROUND

Compounds for modifying the taste of consumable products, that is, products taken orally either for ingestion or spitting out, such as foodstuffs, beverages, confectionery, oral care products and the like are widely used. They do not themselves add flavor to the consumable, but they provide desirable ancillary benefits, such as enhanced mouthfeel and/or sweetness, or masking undesirable characteristics of other ingredients, such as the distinctive tastes and textures perceived as unappealing of products containing sugar replacers.

In the case of sugar replacers, the tastes they impart can present different temporal profiles, flavor-profiles or adaptation behaviors compared with the sugars which they replace, in whole or in part. For example, the sweet taste of natural and synthetic high-intensity sweeteners (HIS), is generally slower in onset and longer in duration than the sweet taste produced by sugar (sweet, short-chain, soluble carbohydrates, including glucose, fructose, sucrose, maltose and lactose) or high fructose corn syrups (HFCS) which is known as a replacement for sugar, and this can change the taste balance of an edible composition containing them. This can create unbalanced temporal taste profiles. In addition to the difference in temporal profile, high-intensity sweeteners generally exhibit lower maximal response than sugar; off-tastes including bitter, metallic, cooling, astringent, licorice-like taste and/or sweetness, which diminishes on iterative tasting.

However, all high-intensity sweeteners have undesirable after-taste in the form of off-notes, such as liquorice-like after-taste, and/or lingering sweetness. In the particular case of Reb A, this takes the form of a combination of an undesirable lingering sweetness and a liquorice-like after-taste. This after-taste detracts from the desired sugar-like sweetness. Thus, effectively masking undesirable tastes or off-tastes in edible compositions is key to consumer acceptance of many edible compositions.

Accordingly, there remains a need to provide flavor compositions in order to improve the taste quality and/or the mouthfeel of sweet-tasting substances.

### SUMMARY

The present invention relates to a flavor composition comprising aromadendrin 3-acetate ("ADA"), at least one sweetness modifier selected from the group consisting of steviol glycosides, mogrosides, dihydrochalcones, sweet proteins and combinations thereof.,and glucosylated aromadendrin 3-acetate.

In yet another illustrative embodiment, a consumable is provided. The consumable includes at least one sweetener and a flavor composition according to the present disclosure comprising aromadendrin 3-acetate, and glucosylated aromadendrin 3-acetate, wherein the at least one sweetener is present in a sweetening amount.

Certain embodiments of any aspect of the present disclosure may provide one or more of the following advantages:
- increased sweetness in a composition;
- enhanced sweetness in a composition including at least one sweetener;
- decrease in the amount of caloric sweetener required to obtain desired sweetness;
- improvement of one or more sweetness characteristics to make sweet taste more similar to sugar (sucrose);
- weakening of lingering sweetness (e.g., decreasing the length of time the sweet taste remains and/or decreasing the intensity of the sweet taste more rapidly);
- weakening of bitter taste and/or liquorice taste and/or metallic taste;
- weakening of the sensory perceptions of dryness and/or astringent mouthfeel;
- improvement in sweetness impact (e.g., increasing the maximum intensity of the sweet taste and/or decreases the length of time for the sweet taste to be detected) (e.g., decreasing the lingering sweetness).

These and other features, aspects and advantages of specific embodiments will become evident to those skilled in the art from a reading of the present disclosure.

### DETAILED DESCRIPTION

The following text sets forth a broad description of numerous different embodiments of the present disclosure.

The present disclosure relates to the surprising finding that flavor compositions including aromadendrin 3-acetate in combination with sweetness modifiers and/or taste modifiers improve the taste quality and/or the mouthfeel of sweet-tasting substances.

According to all embodiments, a flavor composition must comprise aromadendrin 3-acetate in combination with at least one sweetness modifier.

Aromadendrin 3-acetate is also known as 2R, 3R-3-acetoxy-5,7,4'-trihydroxyflavanone (CAS No. 62458-55-3). Its chemical structure (I) is given below:

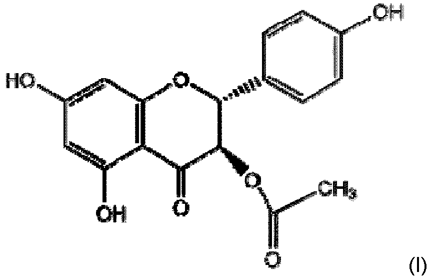

In some embodiments thereof, the aromadendrin 3-acetate exists as a mixture of any two or more, any three or more, or all four of the stereoisomers encompassed by the structure, i.e., (2R,3R), (2R,3S), (2S,3R) and (2S,3S). In another embodiment, the aromadendrin 3-acetate exists in substantially pure form of one of the four stereoisomers, i.e., a purity of 95% or more, or 97% or more, 98% or more, or 99% or more.

In all embodiments the flavor composition must comprise aromadendrin 3-acetate in combination glucosylated aromadendrin 3-acetate.

According to certain illustrative embodiments, a flavor composition may comprise aromadendrin 3-acetate in combination with sweetness modifiers and/or taste modifiers. According to certain embodiments, the amount of aromadendrin 3-acetate present in the flavor composition may be in a concentration of from about 100 ppm to about 70,000 ppm, in another embodiment from about 100 ppm to about 50,000 ppm, such as, for example, from about 100 ppm to about 30,000 ppm, from about 100 ppm to about 25,000 ppm, from about 100 ppm to about 20,000 ppm, from about 100 ppm to about 15,000 ppm, from about 100 ppm to about 10,000 ppm and from about 500 ppm to about 10,000 ppm.

According to all embodiments, a flavor composition must comprise aromadendrin 3-acetate in combination with glucosylated aromadendrin 3-acetate. According to certain embodiments, the amount of glucosylated aromadendrin 3-acetate present in the flavor composition may be in a concentration of from about 100 ppm to about 70,000 ppm, in another embodiment from about 100 ppm to about 50,000 ppm, such as, for example, from about 100 ppm to about 30,000 ppm, from about 100 ppm to about 25,000 ppm, from about 100 ppm to about 20,000 ppm, from about 100 ppm to about 15,000 ppm, from about 100 ppm to about 10,000 ppm and from about 500 ppm to about 10,000 ppm.

The sweetness modifiers may comprise one or more of a wide variety of compounds. According to certain illustrative embodiments, the sweetness modifiers are selected from the group consisting of steviol glycosides, mogrosides, dihydrochalcones and combinations thereof. The term "sweetness modifier", as used herein, refers to a compound that modifies, enhances, amplifies or potentiates the perception of sweetness of a consumable when the compound is present in the consumable in a concentration at or below the compound's sweetness recognition threshold, i.e., a concentration at which the compound does not contribute any noticeable sweet taste in the absence of additional sweetener(s).

According to certain embodiments, the amount of sweetness modifiers present in the flavor composition may be in a concentration of from about 1,000 ppm to about 200,000 ppm, in another embodiment from about 2,000 ppm to about 100,000 ppm, and in another embodiment from about 5,000 ppm to about 100,000 ppm.

The term "sweetness recognition threshold concentration," as used herein, is the lowest known concentration of a compound that is perceivable by the human sense of taste as sweet. In one embodiment, the sweetness modifier is a steviol glycoside(s). Examples of steviol glycosides include, for example, stevioside (CAS: 57817-89-7), rebaudioside A (CAS: 58543-16-1), rebaudioside B (CAS: 58543-17-2), rebaudioside C (CAS: 63550-99-2), rebaudioside D (CAS: 63279-13-0), rebaudioside E (CAS: 63279-14-1), rebaudioside F (CAS: 438045-89-7), rebaudioside G (CAS: 127345-21-5), rebaudioside H, rebaudioside I (CAS: 1220616-34-1), rebaudioside J, rebaudioside K, rebaudioside L, rebaudioside M (CAS: 1220616-44-3), rebaudioside N (CAS: 1220616-46-5), rebaudioside O (CAS: 1220616-48-7), dulcoside A (CAS: 64432-06-0), dulcoside B (CAS: 63550-99-2) and rubusoside (CAS: 64849-39-4).

In another embodiment, the steviol glycoside may be a glucosylated steviol glycoside. The glucosylated steviol glycoside included in the composition may be selected from any one or more steviol glycosides capable of having one or more glucose units added to the molecule by a glucosylation reaction. By way of example, but not in limitation, the glucosylated steviol glycoside included in the sweetness modifying composition may be selected from glucosylated stevioside, glucosylated rebaudioside A, glucosylated rebaudioside B, glucosylated rebaudioside C, glucosylated rebaudioside D, glucosylated rebaudioside E, glucosylated rebaudioside F, glucosylated rebaudioside G, glucosylated rebaudioside H, glucosylated rebaudioside I, glucosylated rebaudioside J, glucosylated rebaudioside K, glucosylated rebaudioside L, glucosylated rebaudioside M, glucosylated rebaudioside N, glucosylated rebaudioside O, glucosylated dulcoside A, glucosylated dulcoside B, glucosylated rubusoside, any other glucosylated steviol glycosides derived from an extract of *Stevia rebaudiana,* and mixtures thereof.

The glucosylated steviol glycosides may have different degrees of glucosylation. The glucosylated steviol glycoside of the composition may therefore comprise a blend of the same type of glucosylated steviol glycoside and having different or varying degrees of glucosylation. The glucosylated steviol glycoside of the composition may also comprise a blend of one or more different types of glucosylated steviol glycoside having the same degree of glucosylation. The glucosylated steviol glycoside of the composition may further comprise a blend of one or more of different types of glucosylated steviol glycoside with each type having different or varying degrees of glucosylation.

The glucosylated steviol glycosides may comprise a blend of at least one glucosylated steviol glycoside and at least one residual steviol glycoside. A residual steviol glycoside refers to an unreacted steviol glycoside that has not been glucosylated. The residual steviol glycoside may include residual stevioside, residual rebaudioside A, residual rebaudioside B, residual rebaudioside C, residual rebaudioside D, residual rebaudioside E, residual rebaudioside F, residual rebaudioside G, residual rebaudioside H, residual rebaudioside I, residual rebaudioside J, residual rebaudioside K, residual rebaudioside L, residual rebaudioside M, residual rebaudioside N, residual rebaudioside O, residual dulcoside A, residual dulcoside B, residual rubusoside, any other residual steviol glycosides derived from an extract of *Stevia rebaudiana,* and mixtures thereof. The blend of the at least one glucosylated steviol glycoside and the at least one residual steviol glycoside may comprise about 1 percent and 15 percent of the at least one residual steviol glycoside. According to certain embodiments, the blend of the at least one glucosylated steviol glycoside and the at least one residual steviol glycoside may comprise between about 1 percent and 10 percent, or about 1 percent to about 8 percent, or about 1 percent to about 6 percent, or about 1 percent to about 4 percent, or about 1 percent to about 2 percent, of the at least one residual steviol glycoside.

The glucosylated steviol glycosides may be prepared by preparing a reaction mixture of one or more steviol glycosides, a source of glucose units to be added to the steviol glycoside molecules, an enzyme to catalyze the glucosylation reaction, and a suitable solvent. According to certain embodiments, the glucosylated steviol glycosides are prepared by preparing a reaction mixture of one or more steviol glycosides, a starch as the source of glucose units to be added to the steviol glycoside molecules, CGTase (cyclodextrin glucano-transferase) to catalyze the glucosylation reaction, and water as the solvent. The glucosylation reaction is carried out on the reaction mixture, and the resulting product is purified and dried. By way of example, the glucosylated steviol glycosides may be prepared in accordance with the disclosure of JP2001-120218 A, which is incorporated by reference. The alpha-glycosyl steviol glycosides (alpha-GS) are prepared by the alpha-addition of glucose by means of cyclodextrin glucosyl-transferase to a stevia extract that contains at least 1.5 times as much RebA as stevioside.

In another embodiment, the sweetness modifier may be one or more mogroside(s). Mogrosides are a group of triterpene glycosides and may be obtained from the fruit Luo Han Guo (*Siraitia grosvenorii*)*,* also known as arhat fruit or longevity fruit or swingle fruit. Mogrosides make up approximately 1% of the flesh of the fresh fruit. Through extraction, an extract in the form of a powder containing up to 80% mogrosides can be obtained. Examples of mogrosides include, for example, grosvenorine II, grosvenorine I, 11-O-mogroside II (I), 11-O-mogroside II (II), 11-O-mogroside II (III), mogroside II (I), mogroside II (II), mogroside II (III), 11-dehydroxy-mogroside III, 11-O-mogroside III, mogroside III (I), mogroside III (II), mogroside IIIe, mogroside IIIx, mogroside IV (I) (siamenoside), mogroside IV (II), mogroside IV (III), mogroside IV (IV), deoxymogroside V (I), deoxymogroside V (II), 11-O-mogroside V (I), mogroside V isomer, mogroside V, iso-mogroside V, iso-mogroside VI, 7-O-mogroside V, 11-O-mogroside VI, 11-epi-mogroside, mogroside VI (I), mogroside VI (II), mogroside VI (III) (neomogroside) and mogroside VI (IV). The mogroside(s) may, for example, be obtained or obtainable from Luo Han Guo extracts.

In another embodiment, the sweetness modifier may be one or more dihydrochalcones. Examples of dihydrochalcones include, for example, trilobatin (1-[4-(beta-D-glucopyranosyloxy)-2,6-dihydroxyphenyl]-3-(4-hydroxyphenyl)-1-propanone is also known as p-Phlorizin, Phloretin, Phloretin 4'-glucoside, Phloretine-4'-glucoside, Prunin dihydrochalcone, or p-Phloridzin); HDG or hesperitin dihydrochalcone (4"-beta-D-glucoside is also known as 1-[4-( -D-glucopyranosyloxy)-2,6-dihydroxyphenyl]-3-(3-hydroxy-4-methoxyphenyl)-1-propanone); naringin dihydrochalcone (NarDHC, is also known as 1-[4-[[2-O-(6-Deoxy-alpha-L-mannopyranosyl)-beta-D-glucopyranosyl]oxy]-2,6-dihydroxyphenyl]-3-(4-hydroxyphenyl)-1-propanone); and neohesperidin dihydrochalcone (NHDC, E959).

Trilobatin is a natural dihydrochalcone type sweetener that occurs in the Chinese sweet tea plant *Lithocarpus polystachyus,* the leaves of which have been consumed as sweet tea in the south of China for centuries. HDG is present in peels/fruit of *Citrus sinensis* L. (Rutaceae), commonly known as sweet orange and C. *reticulata,* commonly known as tangerine or mandarin. The synthesis of HDG may be performed by reduction of hesperidin in dilute alkali which yields hesperidin dihydrochalcone, followed by partial hydrolysis, either by acid or by a dissolved or immobilized enzyme, to form HDG, for example as described in US 3,429,873.

In another embodiment, the sweetness modifier may be a sweet protein, for example, brazzein. Brazzein is a sweet-tasting protein extracted from the West African fruit of the climbing plant Oubli (*Pentadiplandra brazzeana Baillon*)*.* It was first isolated by the University of Wisconsin-Madison in 1994. Brazzein is found in the extracellular region, in the pulp tissue surrounding the seeds. Like the other sweet proteins discovered in plants, it is extremely sweet compared to commonly used sweeteners (500 to 2000 times sweeter than sucrose). Other sweet proteins may include, thaumatin, monelin, curculin, mabinlin, miraculin and pentadin.

Other additional sweetness modifiers may include, glycyphyllin, mukurozioside IIb, (+)-hernandulcin, 4β-hydroxyhernandulcin, baiyunoside, phlomisoside I, bryodulcoside, bryoside bryonoside, abrusosides A-E, cyclocarioside A, cyclocaryoside I, albiziasaponins A-E, glycyrrhizin, araboglycyrrhizin, periandrins I-V, pterocaryosides A and B, osladin, polypodosides A and B, telosmosideA8- 18, phyllodulcin, huangqioside E neoastilbin, monatin, 3-acetoxy-5,7- dihydroxy-4'-methoxyflavanone, 4'-trihydroxyflavanone, (2R,3R)-dihydroquercetin 3-0- acetate, dihydroquercetin 3-0-acetate 4'-methyl ether, hesepertin, neoculin, or combinations thereof.

According all embodiments, the flavor compositions must comprise aromadendrin 3-acetate in combination with at least one taste modifier.

According to all embodiments the taste modifier of the composition comprises a glucosylated aromadendrin 3-acetate ("ADA"). The glucosylated aromadendrin 3-acetate may have different degrees of glucosylation. In one embodiment, the glucosylated aromadendrin 3-acetate of the composition may comprise a blend of the same type of glucosylated aromadendrin 3-acetate and having different or varying degrees of glucosylation. For example, the glycosylated ADA may be β-G-ADA and may comprise of any one of 7-β-glycosylated ADA, 4'-B-glycosylated ADA, or 7,4'-β-glycosylated ADA in which n is an integer from 1-15. In another embodiment, the glycosylated ADA may be α-G-ADA and may comprise of any one of 7-α-glycosylated ADA, 4'-α-glycosylated ADA, or 7,4'-α-glycosylated ADA in which n is an integer from 1-15.

The flavor composition described herein may modify and/or modulate the taste of at least one sweetener. The at least one sweetener can be any known sweetener, for example, a natural sweetener, a natural high potency sweetener or a synthetic sweetener.

The at least one sweetener is present in a sweetening amount. "Sweetening amount", as used herein, refers to the amount of compound required to provide detectable sweetness when present in a consumable, e.g., a beverage.

As used herein, the phrase "natural high potency sweetener" refers to any sweetener found naturally in nature and characteristically has a sweetness potency greater than sucrose, fructose, or glucose, yet has less calories. The natural high potency sweetener can be provided as a pure compound or, alternatively, as part of an extract. As used herein, the phrase "synthetic sweetener" refers to any composition which is not found naturally in nature and characteristically has a sweetness potency greater than sucrose, fructose, or glucose, yet has less calories.

In other embodiments, the at least one sweetener is a carbohydrate sweetener. Suitable carbohydrate sweeteners are selected from, but not limited to, the group consisting of sucrose, glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, fucose, rhamnose, turanose, cellobiose, sialose and combinations thereof. In other embodiments, the at least one sweetener does not comprise a carbohydrate sweetener.

In another embodiment, the additional sweetener is a rare sugar selected from sorbose, lyxose, ribulose, xylose, xylulose, D-allose, L-ribose, D-tagatose, L-glucose, L-fucose, L-arabinose, turanose, D-allulose (D-Psicose), rhamnose and combinations thereof. Other sweeteners include Siamenoside I, monatin and its salts (monatin SS, RR, RS, SR), curculin, glycyrrhizic acid and its salts, thaumatin, monellin, mabinlin, tamatin, hemandulcin, phyllodulcin, glycyphyllin, trilobatin, baiyunoside, osladin, polypodoside A, pterocaryoside A, pterocaryoside B, mukurozioside, phlomisoside I, periandrin I, abrusoside A, steviolbioside and cyclocarioside I, sucralose, potassium acesulfame, acesulfame acid and salts thereof, aspartame, alitame, saccharin and salts thereof, hesperidin dihydrochalcone glucoside, neohesperidin dihydrochalcone, cyclamate, cyclamic acid and salts thereof, neotame, advantame, glucosylated steviol glycosides (GSGs) and combinations thereof.

In another embodiment, the additional sweetener is a sugar alcohol selected from allulose, erythritol, xylitol, maltitol, mannitol, isomalt, sorbitol, inositol, lactitol and combinations thereof.

In one embodiment, the sweetener is a caloric sweetener or mixture of caloric sweeteners. In another embodiment, the caloric sweetener is selected from sucrose, fructose, glucose, high fructose corn/starch syrup, a beet sugar, a cane sugar and combinations thereof.

In other embodiments, the sweetener comprises at least one steviol glycoside or mogroside, wherein the at least one steviol glycoside or mogroside is present in a sweetening amount.

### Products

According to the present disclosure, aromadendrin 3-acetate may be added to a sweetened consumable (i.e., a consumable having at least one sweetener therein), or may be provided as part of a flavor composition for consumables.

In one embodiment, aromadendrin 3-acetate is present in the flavor composition in an amount such that, when the flavor composition is added to a sweetened consumable, the sucrose equivalence of the consumable is increased compared to the consumable in the absence of aromadendrin 3-acetate.

When added to a consumable, aromadendrin 3-acetate and/or glucoylated aromadendrin 3-acetate is included in an amount effective to modify the sweetness or mouthfeel of a sweetener without exhibiting any off-taste. According to certain embodiments, the amount of aromadendrin 3-acetate present in the consumable may be in a concentration of from about 0.05 ppm to about 70 ppm, in another embodiment from about 0.05 ppm to about 50 ppm, such as, for example, from about 0.05 ppm to about 30 ppm, from about 0.05 ppm to about 25 ppm, from about 0.05 ppm to about 20 ppm, from about 0.05 ppm to about 15 ppm, from about 0.05 ppm to about 10 ppm, from about 0.1 ppm to about 10 ppm and from about 0.5 ppm to about 10 ppm.

In another embodiment, flavor compositions may include aromadendrin 3-acetate in combination with aroma ingredients, sweetness modifiers and/or taste modifiers to improve the taste quality and/or the mouthfeel of sweet-tasting substances. According to certain embodiments, the amount of sweetness modifiers present in the consumable may be in a concentration of from about 1 ppm to about 200 ppm, in another embodiment from about 2 ppm to about 100 ppm, and in another embodiment from about 5 ppm to about 50 ppm. According to certain embodiments, the amount of certain taste modifiers selected from chlorogenic acid or choline chloride and combinations thereof present in the consumable may be in a concentration of from about 0.5 ppm to about 100 ppm, in another embodiment from about 1 ppm to about 50 ppm, and in another embodiment from about 5 ppm to about 30 ppm. According to other embodiments, the amount of certain taste modifiers selected from N-oleoyl proline, N-oleoyl valine, N-oleoyl serine, N-oleoyl aspartic acid, N-acylated methionine sulfoxides and combinations thereof present in the consumable may be in a concentration of from about 0.0001 ppm to about 1 ppm, in another embodiment from about 0.0005 ppm to about 0.5 ppm, and in another embodiment from about 0.001 ppm to about 0.1 ppm.

In one embodiment, the at least one sweetener described herein is present in the consumable in a concentration from about 50 ppm to about 600 ppm, such as, for example, about 50 ppm to about 500 ppm, from about 50 ppm to about 400 ppm, from about 50 ppm to about 300 ppm, from about 50 ppm to about 200 ppm, from about 50 ppm to about 100 ppm, about 100 ppm to about 600 ppm, about 100 ppm to about 500 ppm, about 100 ppm to about 400 ppm, about 100 ppm to about 300 ppm, about 100 ppm to about 200 ppm, about 200 ppm to about 600 ppm, about 200 ppm to about 500 ppm, about 200 ppm to about 400 ppm, about 200 ppm to about 300 ppm, about 300 ppm to about 600 ppm, about 300 ppm to about 500 ppm, about 300 ppm to about 400 ppm, about 400 ppm to about 600 ppm, about 400 ppm to about 500 ppm and about 500 ppm to about 600 ppm. In another embodiment, for full and reduced sugar applications, the at least one sweetener may be present in the consumable in a concentration up to 1,000 ppm.

When expressed as "ppm", the concentration is parts per million by weight based on the total weight of the consumable. It should be understood that when a range of values is described in the present disclosure, it is intended that any and every value within the range, including the end points, is to be considered as having been disclosed. It is to be understood that the inventors appreciate and understand that any and all values within the range are to be considered to have been specified, and that the inventors have possession of the entire range and all the values within the range.

Flavor compositions may also contain one or more food grade excipient(s). Suitable excipients for flavor compositions are well known in the art and include, for example, without limitation, solvents (including water, alcohol, ethanol, oils, fats, vegetable oil, and miglyol), binders, diluents, disintegranting agents, lubricants, flavoring agents, colouring agents, preservatives, antioxidants, emulsifiers, stabilisers, flavor-enhancers, sweetening agents, anti-caking agents, and the like. Examples of such carriers or diluents for flavors may be found e.g. in "Perfume and Flavour Materials of Natural Origin", S. Arctander, Ed., Elizabeth, N.J., 1960; in "Perfume and Flavor Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J.M. Nikitakis (ed.), 1st ed., The Cosmetic, Toiletry and Fragrance Association, Inc., Washington, 1988.

The flavor composition may have any suitable form, for example liquid or solid, wet or dried, or in encapsulated form bound to or coated onto carriers/particles or as a powder.

In the present disclosure, the term "about" used in connection with a value is inclusive of the stated value and has the meaning dictated by the context. For example, it includes at least the degree of error associated with the measurement of the particular value. One of ordinary skill in the art would understand the term "about" is used herein to mean that an amount of "about" of a recited value produces the desired degree of effectiveness in the compositions and/or methods of the present disclosure. One of ordinary skill in the art would further understand that the metes and bounds of "about" with respect to the value of a percentage, amount or quantity of any component in an embodiment can be determined by varying the value, determining the effectiveness of the compositions or methods for each value, and determining the range of values that produce compositions or methods with the desired degree of effectiveness in accordance with the present disclosure.

The consumable may include a base. As used herein, the term "base" refers to all the ingredients necessary for the consumable, apart from the flavor composition. These will naturally vary in both nature and proportion, depending on the nature and use of the consumable or additive, but they are all well known to the art and may be used in art-recognized proportions. The formulation of such a base for every conceivable purpose is therefore within the ordinary skill of the art. For example, the base for a beverage according to the present disclosure may include about 5% sucrose and about 0.05% citric acid in water.

Without limitation, and only by way of illustration, suitable bases may include, anti-caking agents, anti-foaming agents, anti-oxidants, binders, colourants, diluents, disintegrants, emulsifiers, encapsulating agents or formulations, enzymes, fats, flavor-enhancers, flavoring agents, gums, polysaccharides, preservatives, proteins, solubilisers, solvents, stabilisers, sugar-derivatives, surfactants, sweetening agents, vitamins, waxes, and the like. Solvents which may be used are known to those skilled in the art and include e.g., water, ethanol, ethylene glycol, propylene glycol, glycerine and triacetin. Encapsulants and gums include maltodextrin, gum arabic, alginates, gelatine, modified starch, other polysaccharides, and proteins.

Examples of excipients, carriers, diluents or solvents for flavor compounds may be found e.g. in "Perfume and Flavour Materials of Natural Origin", S. Arctander, Ed., Elizabeth, N.J., 1960; in "Perfume and Flavour Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J. M. Nikitakis (ed.), 1st ed., The Cosmetic, Toiletry and Fragrance Association, Inc., Washington, 1988.

Non-limiting examples of suitable flavor-providing ingredients include natural flavors, artificial flavors, spices, seasonings, and the like. These include synthetic flavor oils and flavoring aromatics and/or oils, oleoresins, essences, and distillates, and combinations thereof.

Ancillary ingredients may be present to provide other benefits such as enhanced stability, ease of incorporation into a consumable or additive and enhanced nutritional value. Non-limiting typical examples of such ancillary ingredients include stabilizers, emulsifiers, preservatives, gums, starches, dextrins, vitamins and minerals, functional ingredients, salts, antioxidants, and polyunsaturated fatty acids. Particular examples are emulsifiers and carriers, useful in spray drying processes. Non-limiting examples of these are modified starches, such as CAPSUL^{™}, and maltodextrin.

The additive may be a single ingredient or a blend of ingredients, or it may be encapsulated in any suitable encapsulant. The additive may be prepared by any suitable method, such as spray drying, extrusion and fluidized bed drying.

According to the present disclosure, the term "consumable" refers to products for consumption by a subject, typically via the oral cavity (although consumption may occur via non-oral means such as inhalation), for at least one of the purposes of enjoyment, nourishment, or health and wellness benefits. Consumables may be present in any form including, but not limited to, liquids, solids, semi-solids, tablets, capsules, lozenges, strips, powders, gels, gums, pastes, slurries, solutions, suspensions, syrups, aerosols and sprays. The term also refers to, for example, dietary and nutritional, and health and wellness supplements. Consumables include compositions that are placed within the oral cavity for a period of time before being discarded but not swallowed. It may be placed in the mouth before being consumed, or it may be held in the mouth for a period of time before being discarded.

Broadly, consumables include, but are not limited to, comestibles of all kinds, confectionery products, baked products, sweet products, savoury products, fermented products, dairy products, non-dairy products, beverages, nutraceuticals and pharmaceuticals.

Non-limiting examples of consumables include: wet/liquid soups regardless of concentration or container, including frozen soups. For the purpose of this definition, soup(s) means a food prepared from meat, poultry, fish, vegetables, grains, fruit and other ingredients, cooked in a liquid which may include visible pieces of some or all of these ingredients. It may be clear (as a broth) or thick (as a chowder), smooth, pureed or chunky, ready-to-serve, semi-condensed or condensed and may be served hot or cold, as a first course or as the main course of a meal or as a between meal snack (sipped like a beverage), soup may be used as an ingredient for preparing other meal components and may range from broths (consomme) to sauces (cream or cheese-based soups); dehydrated and culinary foods, including cooking aid products such as: powders, granules, pastes, concentrated liquid products, including concentrated bouillon, bouillon and bouillon like products in pressed cubes, tablets or powder or granulated form, which are sold separately as a finished product or as an ingredient within a product, sauces and recipe mixes (regardless of technology); meal solutions products such as: dehydrated and freeze dried soups, including dehydrated soup mixes, dehydrated instant soups, dehydrated ready-to-cook soups, dehydrated or ambient preparations of ready-made dishes, meals and single serve entrees including pasta, potato and rice dishes; meal embellishment products such as: condiments, marinades, salad dressings, salad toppings, dips, breading, batter mixes, shelf stable spreads, barbecue sauces, liquid recipe mixes, concentrates, sauces or sauce mixes, including recipe mixes for salad, sold as a finished product or as an ingredient within a product, whether dehydrated, liquid or frozen; beverages, including beverage mixes and concentrates, including but not limited to, alcoholic and non-alcoholic ready to drink and dry powdered beverages, carbonated and non-carbonated beverages, e.g., sodas, fruit or vegetable juices, alcoholic and non-alcoholic beverages, teas such as green tea and black tea, wine such as red wine; confectionery products, e.g., cakes, cookies, pies, candies, chewing gums, gelatins, ice creams, sorbets, puddings, jams, jellies, salad dressings, and other condiments, cereal, and other breakfast foods, canned fruits and fruit sauces and the like.

Methods of enhancing the sweetness of a consumable and/or modulating one or more taste attributes of the sweetener to make the consumable taste more like a sucrose-sweetened consumable are provided.

The disclosure is further described with reference to the following non-limiting examples.

### EXAMPLES

The following examples are given solely for the purpose of illustration and are not to be construed as limitations of the present invention.

### Examples

A Base (5% sucrose and 0.05% citric acid in water) for use in beverages was prepared. The Base did not include aromadendrin 3-acetate ("ADA"). A Control was prepared by combining the Base with ADA. The Control in Examples 15 and 16 was prepared by combining the Base with ADA and G-ADA. Different combinations of the Base with ADA, sweetness modifiers and/or taste modifiers were prepared in accordance with the Examples below and were evaluated by experienced flavorists for sweetness characteristics and sensory perceptions of mouthfeel.

### Comparative Example 1 (Control)

| | **ADA (ppm)** | **Comments as compared to Base** |
|---|---|---|
| 1 | 0.1 | Slightly more bitter, slightly sweeter |
| 2 | 0.2 | Slightly sweeter, more bitter, slightly more astringent |
| 3 | 1 | Slightly sweeter, more bitter, more astringent, slightly more lingering sweetness |
| 4 | 5 | Sweeter, more bitter, more astringent, more lingering sweetness |
| 5 | 20 | Sweeter, much more bitter, more astringent, more lingering sweetness, licorice-like aftertaste |
| 6 | 50 | Sweeter, much more bitter, more astringent, more lingering sweetness, licorice-like aftertaste |

### Comparative Example 2 (Control + 30 ppm Reb A)

| | **ADA (ppm)** | **Comments as compared to Base** |
|---|---|---|
| 7 | 0.1 | Slightly less lingering sweet, slightly more sugary mouthfeel |
| 8 | 0.2 | Slightly sweeter, slightly less lingering sweet, slightly more sugary mouthfeel |
| 9 | 1 | Sweeter, more sugary mouthfeel, slightly less lingering sweet, slightly less bitter |
| 10 | 5 | Sweeter, more sugary mouthfeel, less lingering sweet |
| 11 | 20 | Much sweeter, more sugar-syrupy mouthfeel, less astringent |
| 12 | 50 | Much sweeter, more sugar-syrupy mouthfeel, more bitter, more medicinal |

### Comparative Example 3 (Control + 30 ppm Mogroside)

| | **ADA (ppm)** | **Comments as compared to Base** |
|---|---|---|
| 13 | 0.1 | Slightly more sugar-like mouthfeel, slightly more bitter |
| 14 | 0.2 | Slightly sweeter, slightly more upfront sweet, slightly more sugar-like mouthfeel, slightly more bitter |
| 15 | 1 | Sweeter, more sugar-like mouthfeel, slightly more upfront sweet, slightly more bitter |
| 16 | 5 | Much sweeter, more sugar-like mouthfeel, more bitter |
| 17 | 20 | Much sweeter, sweetness overpowering, more bitter |
| 18 | 50 | Much sweeter, sweetness overpowering, much more bitter |

### Comparative Example 4 (Control + 30 ppm Mixture of Steviol Glycosides)

| | **ADA (ppm)** | **Comments as compared to Base** |
|---|---|---|
| 19 | 0.1 | More sugar-like mouthfeel, slightly more bitter |
| 20 | 0.2 | More sugar-like mouthfeel, slightly more bitter |
| 21 | 1 | Sweeter, slightly more sugar-like mouthfeel |
| 22 | 5 | Sweeter, more sugar-like/syrupy mouthfeel, more upfront sweet |
| 23 | 20 | Much sweeter, more sugar-like/syrupy mouthfeel, slightly more bitter |
| 24 | 50 | Much sweeter, more-sugar-like mouthfeel, more bitter |

### Comparative Example 5 (Control + 20 ppm Reb M)

| | **ADA (ppm)** | **Comments as compared to Base** |
|---|---|---|
| 25 | 0.1 | Slightly more upfront sweet, slightly less lingering sweet |
| 26 | 0.2 | Slightly more upfront sweet, slightly sweeter, slightly less lingering sweet |
| 27 | 1 | More upfront sweet, sweeter, slightly less licorice-like, slightly less lingering sweet |
| 28 | 5 | Sweeter, more upfront sweet, slightly more sugar-like mouthfeel |
| 29 | 20 | Sweeter, more upfront sweet, more sugar-like mouthfeel, slightly more bitter |
| 30 | 50 | Sweeter, more upfront sweet, more sugar-like mouthfeel, more bitter |

### Comparative Example 6 (Control + 60 ppm Mixture of Steviol Glycosides)

| | **ADA (ppm)** | **Comments as compared to Base** |
|---|---|---|
| 31 | 0.1 | Slightly sweeter, slightly less licorice-like, slightly less lingering sweet, slightly more bitter |
| 32 | 0.2 | Slightly sweeter, slightly more sugary mouthfeel, slightly less licorice-like |
| 33 | 1 | Slightly sweeter, slightly more sugary mouthfeel, slightly more bitter, slightly more astringent |
| 34 | 5 | Sweeter, slightly more sugary mouthfeel, slightly more bitter, slightly more astringent |
| 35 | 20 | Much sweeter, more sugary mouthfeel, more bitter, more astringent |
| 36 | 50 | Much sweeter, more bitter, more astringent |

### Comparative Example 7 (Control + 10 ppm Siamenoside I)

| | **ADA (ppm)** | **Comments as compared to Base** |
|---|---|---|
| 37 | 0.1 | Slightly more sugary mouthfeel, slightly less astringent |
| 38 | 0.2 | Slightly more sugary mouthfeel, slightly more bitter |
| 39 | 1 | Slightly sweeter, slightly more sugary mouthfeel, slightly more bitter |
| 40 | 5 | Sweeter, more sugary mouthfeel, slightly more bitter |
| 41 | 20 | Much sweeter, slightly more sugary mouthfeel, slightly more bitter |
| 42 | 50 | Much sweeter, slightly more sugary mouthfeel, more bitter |

### Comparative Example 8 (Control + 10 ppm HDG)

| | **ADA (ppm)** | **Comments as compared to Base** |
|---|---|---|
| 43 | 0.1 | Slightly sweeter |
| 44 | 0.2 | Slightly more sugary mouthfeel, slightly sweeter, slightly more astringent |
| 45 | 1 | Slightly more sugary mouthfeel, slightly sweeter, slightly more astringent, slightly more bitter |
| 46 | 5 | Sweeter, more sugary mouthfeel, slightly more bitter, slightly more astringent |
| 47 | 20 | Sweeter, slightly more upfront sweet, slightly more sugary mouthfeel, slightly more bitter |
| 48 | 50 | Much sweeter, slightly more sugary mouthfeel, more bitter |

### Comparative Example 9 (Control + 5 ppm Brazzein)

| | **ADA (ppm)** | **Comments as compared to Base** |
|---|---|---|
| 49 | 0.1 | Slightly sweeter, more sugary mouthfeel |
| 50 | 0.2 | Slightly sweeter, more sugary mouthfeel, slightly more bitter |
| 51 | 1 | Slightly sweeter, more sugary mouthfeel, slightly more bitter |
| 52 | 5 | Sweeter, more sugary mouthfeel, slightly more bitter, slightly more astringent |
| 53 | 20 | Much sweeter, slightly more sugary mouthfeel, slightly more lingering sweetness, slightly more bitter, slightly more astringent |
| 54 | 50 | Much sweeter, slightly more sugary mouthfeel, slightly more lingering sweetness, more bitter, more astringent |

### Comparative Example 10 (Control + 10 ppm Chlorogenic acid)

| | **ADA (ppm)** | **Comments as compared to Base** |
|---|---|---|
| 55 | 0.1 | Not much difference |
| 56 | 0.2 | Slightly sweeter |
| 57 | 1 | Slightly sweeter |
| 58 | 5 | Sweeter, slightly bitter |
| 59 | 20 | Sweeter, slightly lingering sweetness, slightly bitter |
| 60 | 50 | Sweeter, slightly lingering sweetness, slightly bitter |

### Comparative Example 11 (Control + 20 ppm Choline Chloride)

| | **ADA (ppm)** | **Comments as compared to Base** |
|---|---|---|
| 61 | 0.1 | Slightly sweeter, slightly more sugary mouthfeel |
| 62 | 0.2 | Slightly sweeter, slightly more sugary mouthfeel |
| 63 | 1 | Slightly sweeter, slightly more sugary mouthfeel, slightly more astringent |
| 64 | 5 | Sweeter, slightly more sugary mouthfeel, slightly more astrinegnt, slightly more bitter |
| 65 | 20 | Sweeter, more sugary mouthfeel, slightly more astringent, slightly more bitter |
| 66 | 50 | Much sweeter, more sugary mouthfeel, more bitter, slightly more astringent |

### Comparative Example 12 (4% sucrose, 30 ppm Reb A in non-fat yogurt)

| | **ADA (ppm)** | **Comments as compared to 4% sucrose, 30 ppm Reb A in non-fat vogurt** |
|---|---|---|
| 67 | 0.1 | Slightly sweeter, slightly more bitter, slightly more astringent |
| 68 | 0.2 | Slightly sweeter, slightly more astringent |
| 69 | 1 | Slightly sweeter, more astringent |
| 70 | 5 | Sweeter, slightly more sugary mouthfeel, more astringent |
| 71 | 20 | Sweeter, more sugary mouthfeel, more astringent |
| 72 | 50 | Sweeter, more sugary mouthfeel, more astringent, slightly more lingering sweetness |
| 73 | 70 | Sweeter, more sugary mouthfeel, slightly more bitter, more astringent, slightly more lingering sweetness |

### Comparative Example 13 (30 ppm Reb A in Pea Protein Beverage

| Ingredients | w/w% |
|---|---|
| Pea protein isolate | 3.2 |
| Sucrose | 3.1 |
| Gellan gum | 0.028 |
| Gum Arabic | 0.013 |
| Canola oil | 1 |
| Water | 92.659 |
| Total | 100 |

| | **ADA (ppm)** | **Comments as compared to 30 ppm Reb A in Pea Protein Beverage** |
|---|---|---|
| 74 | 0.1 | Slightly more bitter, slightly less lingering sweetness |
| 75 | 0.2 | Slightly sweeter, slightly less lingering sweetness, slightly less licorice-like |
| 76 | 1 | Slightly sweeter, slightly more sugary mouthfeel, less licorice-like, slightly less lingering sweetness |
| 77 | 5 | Sweeter, slightly more sugary mouthfeel, slightly less lingering sweetness, less licorice-ike, slightly less pea off-notes |
| 78 | 20 | Sweeter, slightly more sugary mouthfeel, slightly less lingering sweetness, less licorice-ike, slightly more bitter, slightly less pea off-notes |
| 79 | 50 | Sweeter, more sugary mouthfeel, slightly more bitter, slightly less licorice-like, slightly less pea off-notes |
| 80 | 70 | Much sweeter, more sugary mouthfeel, more bitter, less pea off-notes |

### Comparative Example 14 (Control + 0.1 ppm Thaumatin)

| | **ADA (ppm)** | **Comments as compared to Base** |
|---|---|---|
| 81 | 0.1 | Slightly sweeter, slightly more sugary mouthfeel |
| 82 | 0.2 | Slightly sweeter, slightly more sugary mouthfeel, slightly more bitter |
| 83 | 1 | Slightly sweeter, more sugary mouthfeel, slightly more bitter |
| 84 | 5 | Sweeter, more sugary, slightly more bitter, slightly more astringent |
| 85 | 20 | Sweeter, slightly more sugary, slightly more licorice-like, more bitter, slightly more astringent |
| 86 | 50 | Much sweeter, slightly more sugary mouthfeel, more licorice-like, more bitter, slightly more astringent |

### Comparative Example 15 (Control)

| | **ADA (ppm)** | **G-ADA (ppm)** | **Comments as compared to Base** |
|---|---|---|---|
| 87 | 0.05 | 0.05 | Slightly more lingering sweetness, slightly more astringent |
| 88 | 0.1 | 0.1 | Slightly sweeter, slightly more lingering sweetness, slightly more astringent |
| 89 | 0.5 | 0.5 | Slightly sweeter, slightly more lingering sweetness, slightly more bitter, more astringent |
| 90 | 2.5 | 2.5 | Sweeter, more lingering sweetness, slightly more bitter, more astringent |
| 91 | 10 | 10 | Sweeter, more lingering sweetness, much more bitter, much more astringent |
| 92 | 25 | 25 | Much sweeter, more lingering sweetness, more bitter, much more astringent |

| | | | |
|---|---|---|---|
| *G-ADA (β-glucosylated ADA) | | | |

### Example 16 (Control + 30 ppm Reb A)

| | **ADA (ppm)** | **G-ADA (ppm)** | **Comments as compared to Base** |
|---|---|---|---|
| 93 | 0.05 | 0.05 | Slightly more sugary mouthfeel |
| 94 | 0.1 | 0.1 | Slightly sweeter, slightly more sugary mouthfeel |
| 95 | 0.5 | 0.5 | Slightly sweeter, slightly more sugary mouthfeel |
| 96 | 2.5 | 2.5 | Sweeter, more sugary mouthfeel, slightly more lingering sweetness, slightly more bitter, slightly more astringent |
| 97 | 10 | 10 | Sweeter, more sugary mouthfeel, slightly more lingering sweetness, slightly more bitter, slightly more astringent, slihglty more licorice-like |
| 98 | 25 | 25 | Much sweeter, slightly more sugary mouthfeel, slightly more licorice-like, slightly more lingering sweetness, slightly more bitter, slightly more astringent |

| | | | |
|---|---|---|---|
| *G-ADA (β-glucosylated ADA) | | | |

With respect to Examples 15 and 16, the β-glycosylation of ADA was produced with a natural enzyme. The enzyme transfers glucose units from glucose donor to ADA. The enzyme used to facilitate this transfer is produced by means of fermentation using bacteria. In one example, the enzymes could be UGTs (UDP-glucuronosyltransferases) or CGTase (cyclomaltodextrin glucanotransferase). The steps for β-glycosylation of ADA are as follows:
a) UDPG (Uridine diphosphate glucose) is dissolved in Tri-HCl buffer (pH between 7-8);
b) The compound ADA with purity between 75% and 99% is added into UDPG buffer mixture;
c) The molar concentration of UDPG to ADA ratio was optimized between 35:65 and 65:35;
d) YIJC1 (UGTs) is added to mixture and incubated at 45°C for a desired length of reaction time to glycosylate ADA with glucose molecules derived from UDPG;
e) Methanol was added into the reaction mixture to deactivate the enzyme, the resulting solution was subjected to HP20 resins for purification, the enriched glycosylated ADA (G-ADA) was further concentrated by means of conventional vacuum evaporator and dried; and
f) The glycosylated ADA (β-G-ADA) comprises of any one of 7-β-glycosylated ADA, 4'-β-glycosylated ADA, or 7,4'-β-glycosylated ADA (see below) in which n is an integer from 1-15.

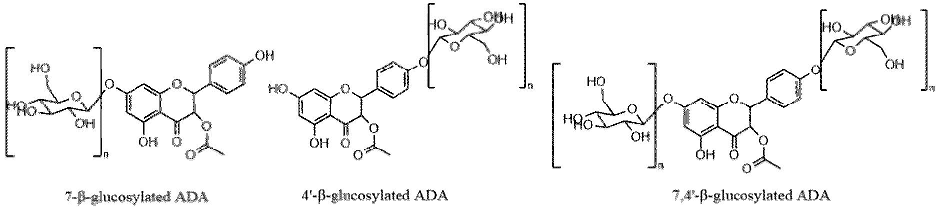

In another embodiment, the α-glycosylation of ADA may be produced. The steps for α-glycosylation of ADA are as follows:
a) Soluble potato starch is dissolved in RO water;
b) The compound ADA with purity between 75% and 99% is added into the starch solution;
c) The molar concentration of soluble potato starch to ADA ratio was optimized between 35:65 and 65:35;
d) CGTase (cyclomaltodextrin glucanotransferase) enzyme is added to mixture and incubated at 60°C for a desired length of reaction time to glycosylate ADA with glucose molecules derived from the starch;
e) The reaction mixture is heated to 100°C for 15min to inactivate the CGTase, the resulting solution was subjected to HP20 resins for purification, the enriched glycosylated ADA (G-ADA) was further concentrated by means of conventional vacuum evaporator and dried; and
f) The α-glycosylated ADA (α-G-ADA) comprise any one of 7-α-glycosylated ADA, 4'-α-glycosylated ADA, or 7,4'-α-glycosylated ADA (see below) in which n is an integer from 1-15.

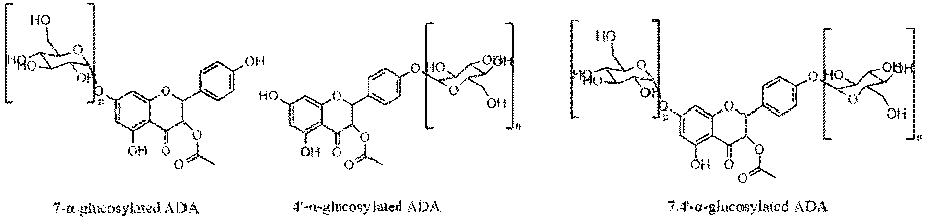

The compositions of the above Examples were taste tested by experienced flavorists and the combinations were compared to the Base. As is seen, the combinations of ADA with sweetness modifier(s) were found to have a sweeter and/or more sugar-like mouthfeel and/or less lingering sweetness and/or less licorice-like taste. The combinations of ADA with taste modifier(s) were also found to have a more sugar-like mouthfeel and/or less lingering sweetness and/or less licorice-like taste and/or less bitter and/or less astringent.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A flavor composition comprising:
a. aromadendrin 3-acetate;
b. at least one sweetness modifier selected from the group consisting of steviol glycosides, mogrosides, dihydrochalcones, sweet proteins, and combinations thereof; and
c. glucosylated aromadendrin 3-acetate.

2. The flavor composition of claim 1, wherein the steviol glycosides are selected from the group consisting of rebaudioside M, rebaudioside D, rebaudioside A, rebaudioside N, rebaudioside O, rebaudioside E, steviolmonoside, steviolbioside, rubusoside, dulcoside B, dulcoside A, rebaudioside B, rebaudioside G, stevioside, rebaudioside C, rebaudioside F, rebaudioside I, rebaudioside H, rebaudioside L, rebaudioside K, rebaudioside J, rebaudioside M2, rebaudioside D2, rebaudioside S, rebaudioside T, rebaudioside U, rebaudioside V, rebaudioside W, rebaudioside Z1, rebaudioside Z2, rebaudioside IX, enzymatically glucosylated steviol glycosides, and combinations thereof.

3. The flavor composition of claim 1, wherein the mogrosides are selected from the group consisting of grosvenorine II, grosvenorine I, 11-O-mogroside II (I), 11-O-mogroside II (II), 11-O-mogroside II (III), mogroside II (I), mogroside II (II), mogroside II (III), 11-dehydroxy-mogroside III, 11-O-mogroside III, mogroside III (I), mogroside III (II), mogroside IIIe, mogroside IIIx, mogroside IV (I) (siamenoside), mogroside IV (II), mogroside IV (III), mogroside IV (IV), deoxymogroside V (I), deoxymogroside V (II), 11-O-mogroside V (I), mogroside V isomer, mogroside V, iso-mogroside V, iso-mogroside VI, 7-O-mogroside V, 11-O-mogroside VI, 11-epi-mogroside, mogroside VI (I), mogroside VI (II), mogroside VI (III) (neomogroside), mogroside VI (IV), and combinations thereof.

4. The flavor composition of claim 1, wherein the dihydrochalcones are selected from the group consisting of phloretin, HDG, trilobatin, naringin dihydrochalcone, neohesperidin dihydrochalcone, and combinations thereof.

5. The flavor composition of claim 1, wherein aromadendrin 3-acetate is present in the flavor composition in a concentration of from 100 ppm to 70,000 ppm.

6. A consumable comprising:
a. at least one sweetener; and
b. a flavor composition including aromadendrin 3-acetate; and at least one sweetness modifier selected from the group consisting of steviol glycosides, mogrosides, dihydrochalcones, sweet proteins and combinations thereof; and glucosylated aromadendrin 3-acetate;
wherein the at least one sweetener is present in a sweetening amount.

7. The consumable of claim 6, wherein the at least one sweetener is selected from the group consisting of sucrose, fructose, glucose, xylose, arabinose, rhamnose, tagatose, allulose, trehalose, isomaltulose, steviol glycosides, mogrosides, stevia, trilobatin, rubusoside, aspartame, advantame, agave syrup, acesulfame potassium (AceK), high fructose corn syrup, neotame, saccharin, sucralose, high fructose corn syrup, starch syrup, Luo Han Guo extract, neohespiridin dihydrochalcone, naringin dihydrochalcone, HDG, sugar alcohols, cellobiose, psicose, cyclamate, tamatin, molasses, rice syrup, and combinations thereof.

8. The consumable of claim 6, wherein the at least one sweetness modifier is present in a concentration of from 1 ppm to 200 ppm.

9. The consumable of claim 6, wherein the consumable is a beverage.

10. The consumable of claim 6, wherein the amount of aromadendrin 3-acetate present in the consumable is in a concentration of from 0.05 ppm to 70 ppm.

## Patentansprüche

1. Aromazusammensetzung umfassend:
a. Aromadendrin-3-acetat;
b. wenigstens einen Süßemodifikator ausgewählt aus der Gruppe bestehend aus Steviolglycosiden, Mogrosiden, Dihydrochalconen, süßen Proteinen und Kombinationen davon; und
c. glucosyliertes Aromadendrin-3-acetat.

2. Aromazusammensetzung nach Anspruch 1, wobei die Steviolglycoside ausgewählt sind aus der Gruppe bestehend aus Rebaudiosid M, Rebaudiosid D, Rebaudiosid A, Rebaudiosid N, Rebaudiosid O, Rebaudiosid E, Steviolmonosid, Steviolbiosid, Rubusosid, Dulcosid B, Dulcosid A, Rebaudiosid B, Rebaudiosid G, Steviosid, Rebaudiosid C, Rebaudiosid F, Rebaudiosid I, Rebaudiosid H, Rebaudiosid L, Rebaudiosid K, Rebaudiosid J, Rebaudiosid M2, Rebaudiosid D2, Rebaudiosid S, Rebaudiosid T, Rebaudiosid U, Rebaudiosid V, Rebaudiosid W, Rebaudiosid Z1, Rebaudiosid Z2, Rebaudiosid IX, enzymatisch glucosylierten Steviolglycosiden und Kombinationen davon.

3. Aromazusammensetzung nach Anspruch 1, wobei die Mogroside ausgewählt sind aus der Gruppe bestehend aus Grosvenorin II, Grosvenorin I, 11-O-Mogrosid II (I), 11-O-Mogrosid II (II), 11-O-Mogrosid II (III), Mogrosid II (I), Mogrosid II (II), Mogrosid II (III), 11-Dehydroxymogrosid III, 11-0-Mogrosid III, Mogrosid III (I), Mogrosid III (II), Mogrosid IIIe, Mogrosid IIIx, Mogrosid IV (I) (Siamenosid), Mogrosid IV (II), Mogrosid IV (III), Mogrosid IV (IV), Desoxymogrosid V (I), Desoxymogrosid V (II), 11-0-Mogrosid V (I), Mogrosid V Isomer, Mogrosid V, Isomogrosid V, Isomogrosid VI, 7-O-Mogrosid V, 11-O-Mogrosid VI, 11-Epimogrosid, Mogrosid VI (I), Mogrosid VI (II), Mogrosid VI (III) (Neomogrosid), Mogrosid VI (IV) und Kombinationen davon.

4. Aromazusammensetzung nach Anspruch 1, wobei die Dihydrochalcone ausgewählt sind aus der Gruppe bestehend aus Phloretin, HDG, Trilobatin, Naringindihydrochalcon, Neohesperidindihydrochalcon und Kombinationen davon.

5. Aromazusammensetzung nach Anspruch 1, wobei Aromadendrin-3-acetat in der Aromazusammensetzung in einer Konzentration von 100 ppm bis 70.000 ppm vorhanden ist.

6. Konsumgut umfassend:
a. wenigstens einen Süßstoff; und
b. eine Aromazusammensetzung, die Aromadendrin-3-acetat; wenigstens einen Süßemodifikator ausgewählt aus der Gruppe bestehend aus Steviolglycosiden, Mogrosiden, Dihydrochalconen, süßen Proteinen und Kombinationen davon; und glucosyliertes Aromadendrin-3-acetat enthält; wobei der wenigstens eine Süßstoff in einer süßenden Menge vorhanden ist.

7. Konsumgut nach Anspruch 6, wobei der wenigstens eine Süßstoff ausgewählt ist aus der Gruppe bestehend aus Saccharose, Fructose, Glucose, Xylose, Arabinose, Rhamnose, Tagatose, Allulose, Trehalose, Isomaltulose, Steviolglycosiden, Mogrosiden, Stevia, Trilobatin, Rubusosid, Aspartam, Advantam, Agavensirup, Acesulfam-Kalium (AceK), Maissirup mit hohem Fructosegehalt, Neotam, Saccharin, Sucralose, Maissirup mit hohem Fructosegehalt, Stärkesirup, Luo Han Guo-Extrakt, Neohespiridin-Dihydrochalcon, Naringin-Dihydrochalcon, HDG, Zuckeralkoholen, Cellobiose, Psicose, Cyclamat, Tamatin, Melasse, Reissirup und Kombinationen davon.

8. Konsumgut nach Anspruch 6, wobei der wenigstens eine Süßemodifikator in einer Konzentration von 1 ppm bis 200 ppm vorhanden ist.

9. Konsumgut nach Anspruch 6, wobei das Konsumgut ein Getränk ist.

10. Konsumgut nach Anspruch 6, wobei die Menge an Aromadendrin-3-acetat, die in dem Konsumgut vorhanden ist, in einer Konzentration von 0,05 ppm bis 70 ppm vorliegt.

## Revendications

1. Composition d'arôme comprenant :
a. du 3-acétate d'aromadendrine ;
b. au moins un modificateur de sucrosité choisi dans le groupe constitué par les glycosides de stéviol, les mogrosides, les dihydrochalcones, les protéines sucrées et les combinaisons de ceux-ci ; et
c. du 3-acétate d'aromadendrine glucosylé.

2. Composition d'arôme selon la revendication 1, dans laquelle les glycosides de stéviol sont choisis dans le groupe constitué par le rébaudioside M, le rébaudioside D, le rébaudioside A, le rébaudioside N, le rébaudioside O, rébaudioside E, le stéviolmonoside, le stéviolbioside, le rubusoside, le dulcoside B, le dulcoside A, le rébaudioside B, le rébaudioside G, le stévioside, le rébaudioside C, le rébaudioside F, le rébaudioside I, le rébaudioside H, le rébaudioside L, le rébaudioside K, le rébaudioside J, le rébaudioside M2, le rébaudioside D2, le rébaudioside S, le rébaudioside T, le rébaudioside U, le rébaudioside V, le rébaudioside W, le rébaudioside Z1, le rébaudioside Z2, le rébaudioside IX, les glycosides de stéviol glucosylés par voie enzymatique et les combinaisons de ceux-ci.

3. Composition d'arôme selon la revendication 1, dans laquelle les mogrosides sont choisis dans le groupe constitué par la grosvenorine II, la grosvenorine I, le 11-O-mogroside II (I), le 11-O-mogroside II (II), le 11-O-mogroside II (III), le mogroside II (I), le mogroside II (II), le mogroside II (III), le 11-désoxy-mogroside III, le 11-0-mogroside III, le mogroside III (I), le mogroside III (II), le mogroside IIIe, le mogroside IIIx, le mogroside IV (I) (siamenoside), le mogroside IV (II), le mogroside IV (III), le mogroside IV (IV), le désoxy-mogroside V (I), le désoxy-mogroside V (II), le 11-O-mogroside V (I), un isomère du mogroside V, le mogroside V, l'iso-mogroside V, l'iso-mogroside VI, le 7-0-mogroside V, le 11-O-mogroside VI, le 11-épi-mogroside VI (I), le mogroside VI (II), le mogroside VI (III) (néomogroside), le mogroside VI (IV) et les combinaisons de ceux-ci.

4. Composition d'arôme selon la revendication 1, dans laquelle les dihydrochalcones sont choisies dans le groupe constitué par la phlorétine, le HDG, la trilobatine, la naringine dihydrochalcone, la néohespéridine dihydrochalcone et les combinaisons de ceux-ci.

5. Composition d'arôme selon la revendication 1, le 3-acétate d'aromadendrine étant présent dans la composition d'arôme en une concentration allant de 100 ppm à 70 000 ppm.

6. Produit consommable comprenant :
a. au moins un agent sucrant ; et
b. une composition d'arôme renfermant du 3-acétate d'aromadendrine ; au moins un modificateur de sucrosité choisi dans le groupe constitué par les glycosides de stéviol, les mogrosides, les dihydrochalcones, les protéines sucrées et les combinaisons de ceux-ci ; et du 3-acétate d'aromadendrine glucosylé ;
dans lequel l'au moins un agent sucrant est présent en une quantité sucrante.

7. Produit consommable selon la revendication 6, dans lequel l'au moins un agent sucrant est choisi dans le groupe constitué par le saccharose, le fructose, le glucose, le xylose, l'arabinose, le rhamnose, le tagatose, l'allulose, le tréhalose, l'isomaltulose, les glycosides de stéviol, les mogrosides, la stévia, la trilobatine, le rubusoside, l'aspartame, l'advantame, le sirop d'agave, l'acésulfame de potassium (AceK), le sirop de maïs à haute teneur en fructose, le néotame, la saccharine, le sucralose, le sirop de maïs à haute teneur en fructose, le sirop d'amidon, un extrait de Luo Han Guo, la néohespéridine dihydrochalcone, la naringine dihydrochalcone, le HDG, les alcools de sucres, le cellobiose, le psicose, le cyclamate, la tamatine, la mélasse, le sirop de riz et les combinaisons de ceux-ci.

8. Produit consommable selon la revendication 6, dans lequel l'au moins un modificateur de sucrosité est présent en une concentration allant de 1 ppm à 200 ppm.

9. Produit consommable selon la revendication 6, le produit consommable étant une boisson.

10. Produit consommable selon la revendication 6, la quantité de 3-acétate d'aromadendrine présente dans le produit consommable étant en une concentration allant de 0,05 ppm à 70 ppm.
